# EUROPÄISCHE PATENTSCHRIFT

(11) **EP 0 569 395 B1**
(45) Veröffentlichungstag und Bekanntmachung des Hinweises auf die Patenterteilung: **23.11.1994**
(21) Anmeldenummer: 92902948.6
(22) Anmeldetag: 27.01.1992
(51) Int. Cl.: B62D 7/15, B62D 7/14

(54) **ELEKTROMOTORISCHE ANTRIEBSEINHEIT ZUR BETÄTIGUNG EINER ELEKTROMECHANISCHEN HINTERRADLENKUNG VON KRAFTFAHRZEUGEN**
ELECTRIC MOTOR DRIVE UNIT FOR ACTUATING AN ELECTROMECHANICAL REAR-WHEEL STEERING DEVICE FOR MOTOR VEHICLES
UNITE D'ENTRAINEMENT ELECTROMOTRICE SERVANT A ACTIONNER UNE DIRECTION ELECTROMECANIQUE DE ROUES ARRIERES POUR AUTOMOBILES

(30) Priorität: 29.01.1991 DE 4102492
(43) Veröffentlichungstag der Anmeldung: 18.11.1993
(73) Patentinhaber: ZF FRIEDRICHSHAFEN Aktiengesellschaft, 88038 Friedrichshafen (DE); Bayerische Motoren Werke Aktiengesellschaft, 80788 München (DE)
(72) Erfinder: HÄGELE, Gerhard, D-7083 Hohenstadt (DE); BUDAKER, Martin, D-7072 Heubach (DE); KNÖDLER, Helmut, D-7073 Lorch (DE); NIKLAS, Johann, D-8048 Haimhausen (DE)
(86) Internationale Anmeldenummer: EP9200167
(87) Internationale Veröffentlichungsnummer: WO9212888

(56) Entgegenhaltungen:
- EP-A- 0 345 555
- DE-A- 3 933 769
- PATENT ABSTRACTS OF JAPAN, Band 13, Nr. 528 (M-898)(3876), 29. August 1989; & JP-A-1215671

## Beschreibung

Die Erfindung betrifft eine elektromotorische Antriebseinheit zur Betätigung einer elektromechanischen Hinterradlenkung von Kraftfahrzeugen, nach dem Oberbegriff des Anspruches 1. Die Antriebseinheit enthält einen Elektromotor, dessen Abtriebswelle trieblich verbunden ist mit einer Einrichtung zum Verstellen der Hinterräder. Außerdem ist eine Feststelleinrichtung vorhanden zum Feststellen der Abtriebswelle und damit zum Blockieren der Hinterradlenkung.

Eine derartige Antriebseinheit ist bekannt aus der EP-A2- 02 43 180. Die Antriebseinheit wirkt auf die Hinterräder eines mit einer Vierradlenkung ausgerüsteten Kraftfahrzeuges. Bei einer derartigen Vierradlenkung besteht keine mechanische Verbindung vom Lenkhandrad zu den gelenkten Hinterrädern. Die Synchronisierung zwischen dem Lenkhandrad und den Hinterrädern erfolgt auf elektrischem Wege über den Elektromotor, der von einer Elektronikeinheit angesteuert wird. Die Elektronikeinheit ihrerseits erhält verschiedene Signale, beispielsweise von Fahrzeuggeschwindigkeits-, Drehzahl-, Lenkwinkel-Sensoren. Bei einem Ausfall oder bei einer Fehlfunktion eines der Sensoren oder bei einem Bruch einer elektrischen Leitung ist die Synchronisierung gestört. Um zu verhindern, daß sich die Hinterräder unkontrollierbar verstellen, werden der Elektromotor und damit auch die Hinterräder durch eine elektromagnetische Bremse in derjenigen Stellung blockiert, in der sie sich beim Auftreten des Fehlers gerade befinden.

Da die Bremse entsprechend dem maximalen Drehmoment des Elektromotors dimensioniert sein muß, ergibt sich ein relativ hohes Gewicht dieser Bremse. Daraus ergibt sich ein großes zusätzliches Trägheitsmoment, das die Dynamik des Elektromotors vermindert. Damit verbunden ist ein hoher Stromverbrauch und eine zusätzliche Wärmeentwicklung in der Antriebseinheit.

Der Erfindung liegt die Aufgabe zugrunde, die bekannte elektromotorische Antriebseinheit derart zu verbessern, daß die bisher auftretenden Nachteile vermieden werden. Dazu soll insbesondere das Bauvolumen der Antriebseinheit herabgesetzt werden, ohne daß dabei die Sicherheit der Hinterradlenkung verringert würde.

Diese Aufgabe wird durch die im Anspruch 1 gekennzeichnete elektromotorische Antriebseinheit gelöst. Weitere zweckmäßige und vorteilhafte Ausgestaltungen der Erfindung sind in den Unteransprüchen angegeben. Die Lösung besteht insbesondere darin, daß die Feststelleinrichtung durch einen für beide Drehrichtungen schaltbaren Freilauf gebildet ist. In dem Freilauf befinden sich zwischen einem Außenring und einer konzentrisch dazu angeordneten Nabe in einem Käfig geführte Wälzkörper. Der Freilauf wirkt direkt auf die Abtriebswelle des Elektromotors und ist insgesamt ein sehr kleines Bauteil. Das übertragbare Bremsmoment beträgt trotzdem - bei gegebener Abtriebswellenabmessung - ein Mehrfaches des Motormomentes. Der Freilauf besteht im wesentlichen aus Bauteilen, die in Großserie und deshalb sehr kostengünstig hergestellt werden. Durch die gegenüber der bekannten Ausführung fehlende Bremsscheibe und die kurze Bauweise konnte das Trägheitsmoment des Rotors des Elektromotors wesentlich verringert werden. Die Dynamik der Antriebseinheit wird dadurch deutlich erhöht. Der notwendige Motorstrom wird bei gegebener Beschleunigung des Antriebs verringert.

Die beiden Ausführungsbeispiele des Freilaufes arbeiten in gelöstem Zustand völlig reibungsfrei. Beim ersten Ausführungsbeispiel werden die Wälzkörper, die als Klemmrollen wirken, durch den Käfig direkt oder durch in dem Käfig integrierte Federelemente von der Nabe weggedrückt. Die Nabe kann sich berührungsfrei drehen. In dem gelösten Zustand des Freilaufs wird ein Betätigungsstift durch die Kraft eines Hubmagneten radial nach außen bewegt. Erst bei einem Störfall, sei es in der Steuerung der Hinterradlenkung oder in der Stromversorgung, wird der Betätigungsstift durch die Kraft einer Feder in Richtung auf einen der Wälzkörper bewegt. Dieser Wälzkörper wird bei sich drehender Nabe mitgenommen und verklemmt sich zwischen Nabe und Außenring. Gleichzeitig nimmt dieser Wälzkörper über den Käfig alle übrigen Wälzkörper in die Klemmstellung mit.

Bei dem zweiten Ausführungsbeispiel wird der Betätigungsstift durch die Kraft des Hubmagneten radial nach innen in Richtung auf die Nabe bewegt. Dadurch wird der Käfig über eine Zentriereinrichtung in seiner Mittelstellung gehalten, so daß die Wälzkörper jeweils zwischen zwei Klemmflächen des Außenringes zu liegen kommen und auf der Nabe frei abrollen. Beim Auftreten eines Fehlers bzw. bei Ausfall des Steuerstromes drückt eine Feder den Betätigungsstift von der Zentriereinrichtung des Käfigs weg. Bei sich drehender Nabe werden dann die Wälzkörper von der Nabe mitgenommen und der Käfig wird in die Klemmstellung gedreht.

Bei beiden Ausführungsbeispielen kann die Elastizität beim Sperrvorgang dadurch erhöht werden, daß die Umfangsfläche der Nabe elastisch ausgebildet wird. Dies ist auf einfache Weise dadurch möglich, daß die Umfangsfläche der Nabe mit mehreren parallel zueinander angeordneten Ringnuten versehen wird. Übersteigt die Belastung ein bestimmtes Maß, so verformen sich die zwischen den Ringnuten stehenden Stege. Dadurch wird das auftretende Brems-Spitzenmoment verringert.

Eine ähnliche Wirkung kann dadurch erzielt werden, daß die Nabe in ihrem Inneren, d. h. zwischen ihrer Umfangsfläche und ihrem Nabenkern, einen drehelastischen Ring aufweist. Dadurch kann die Umfangsfläche innerhalb geringer Grenzen nachgeben, so daß auch hier nur mit geringeren Brems-Spitzenmomenten zu rechnen ist.

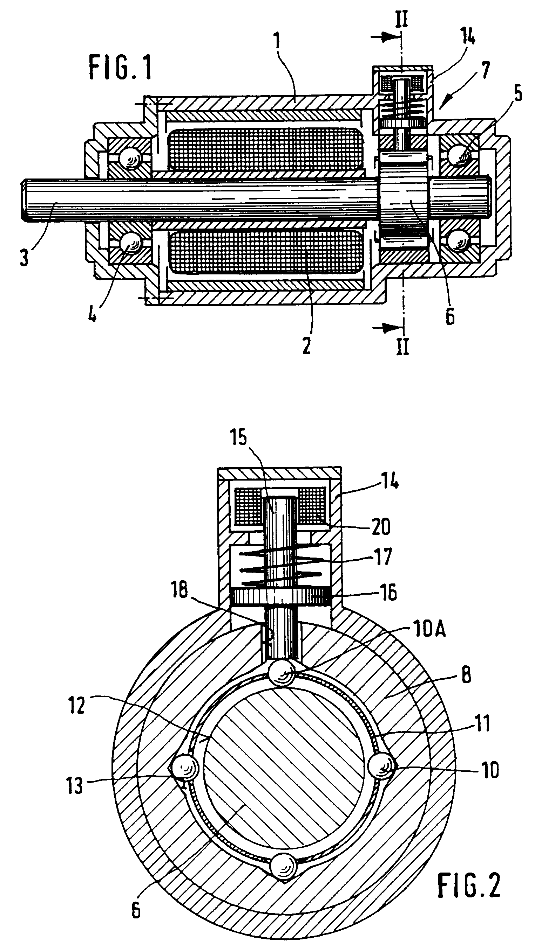

Im folgenden wird die Erfindung anhand zweier in der Zeichnung dargestellter Ausführungsbeispiele näher erläutert. Es zeigt
- Fig. 1: einen Längsschnitt durch die erfindungsgemäße elektromotorische Antriebseinheit,
- Fig. 2: den Querschnitt gemäß der Linie II-II in Fig. 1 in einem ersten Ausführungsbeispiel, in vergrößertem Maßstab,
- Fig. 3: den Querschnitt der Fig. 2, jedoch mit einer Variante des Käfigs,
- Fig. 4: einen Querschnitt der Linie II-II in Fig. 1 in einem zweiten Ausführungsbeispiel, in vergrößertem Maßstab,
- Fig. 5: einen Teillängsschnitt durch den Freilauf mit einer ersten Ausführungsvariante der Nabe, in vergrößertem Maßstab,
- Fig. 6: einen Teillängsschnitt durch den Freilauf mit einer zweiten Ausführungsvariante der Nabe, in vergrößertem Maßstab.

Die elektromotorische Antriebseinheit enthält in einem Gehäuse 1 einen Elektromotor 2, dessen Abtriebswelle 3 in dem Gehäuse 1 über zwei Lager 4, 5 drehbar gelagert ist. Die Abtriebswelle 3 ist trieblich verbunden mit einer nicht dargestellten Einrichtung zum Verstellen der Hinterräder eines Kraftfahrzeuges. Die triebliche Verbindung von der Abtriebswelle 3 zu den Hinterrädern kann beispielsweise über eine nicht dargestellte Kugelumlaufeinrichtung erfolgen, die die Drehbewegung der Abtriebswelle 3 in eine Translationsbewegung einer nicht dargestellten Schubstange umwandelt.

Die Abtriebswelle 3 ist in einem Bereich als Nabe 6 eines Freilaufes 7 ausgebildet, der koaxial zu dem Elektromotor 2 in dem Gehäuse 1 angeordnet ist.

Der Freilauf besteht im wesentlichen aus der Nabe 6, einem dazu konzentrisch angeordneten Außenring 8 und zwischen diesen beiden Teilen angeordneten Wälzkörpern 10, in der Form von Klemmrollen, die in einem Käfig 11 geführt sind. Die Nabe 6 weist eine zylindrische Umfangsfläche 12 auf. An der Innenlauffläche des Außenringes 8 sind im Bereich der Wälzkörper 10 für jede Drehrichtung des Freilaufes schräge Klemmflächen 13 ausgebildet. Die Anordnung der zylindrischen Fläche 12 und der Klemmflächen 13 kann bei den Teilen Nabe 6 und Außenring 8 mit gleicher Wirkung auch vertauscht sein.

An dem Freilauf 7 ist in einem Ansatz 14 des Gehäuses 1 ein Betätigungsstift 15 angeordnet. Der Betätigungsstift 15 trägt einen Bund 16, an dem eine Feder 17 angreift, die den Stift 15 in Richtung auf die Nabe drückt. Der Betätigungsstift 15 tritt durch eine Öffnung 18 des Außenringes 8 hindurch, die sich im Bereich eines der Wälzkörper 10 befinden. In dem Ansatz 14 des Gehäuses 1 befindet sich ein Hubmagnet 20 in der Form eines Elektromagneten. Der Hubmagnet ist derart ausgelegt, daß er den Stift radial nach außen, d. h. von dem Wälzkörper 10 weg bewegt, wenn er elektrisch erregt wird.

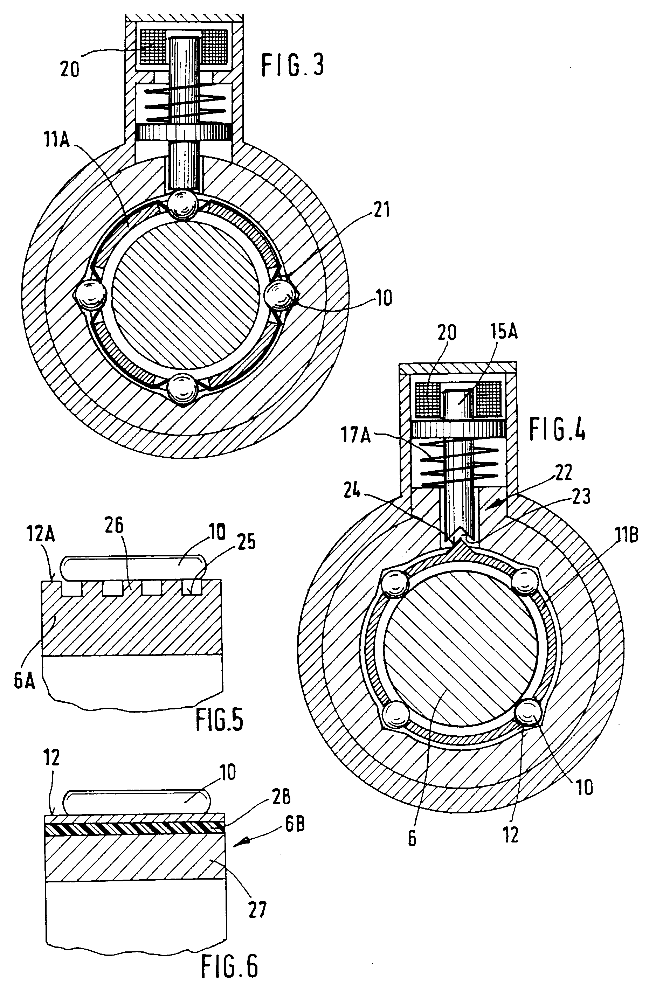

Die beiden in Fig. 2 und 3 dargestellten Varianten des ersten Ausführungsbeispieles unterscheiden sich dadurch, daß der Käfig 11 in Fig. 2 federnd ausgebildet ist, wodurch die Wälzkörper 10 von der Habe 6 weggedrückt bzw. abgehoben werden. In Fig. 3 ist der Käfig 11A dagegen starr ausgeführt. Die Wälzkörper 10 werden durch Federelemente 21, die in dem Käfig 11A integriert sind, von der Nabe 6 weggedrückt bzw. abgehoben.

In dem zweiten Ausführungsbeispiel, das in Fig. 4 dargestellt ist, sind die Wälzkörper 10 in dem Käfig 11B frei geführt. Der Betätigungsstift 15A wird durch die Feder 17A radial nach außen von der Nabe 6 weggedrückt. Der Hubmagnet 20 beaufschlagt den Betätigungsstift 15A in entgegengesetzter Richtung, d. h. in Richtung auf den Käfig 11B. Zwischen dem Betätigungsstift 15A und dem Käfig 11B ist eine Zentriereinrichtung 22 gebildet, die aus zwei dachförmigen Schrägen 23 und 24 besteht. Die dachförmige Schräge 23 ist an dem Betätigungsstift 15A konkav ausgebildet, die dachförmige Schräge 24 ist an dem Käfig 11B konvex ausgebildet.

Im folgenden wird die Funktion des Freilaufes 7 an der elektromotorischen Antriebseinheit beschrieben: Bei dem ersten Ausführungsbeispiel, das in Fig. 2 und 3 beschrieben ist, sind die Wälzkörper 10 in stromlosem Zustand der Antriebseinheit von der Nabe 6 abgehoben. Lediglich der eine Wälzkörper 10A, der im Bereich des Betätigungsstiftes 15 liegt, wird von diesem gegen die Nabe 6 gedrückt. Soll der Elektromotor 2 gestartet werden, so muß vorher der Hubmagnet 20 erregt werden, um den Betätigungsstift 15 von dem Wälzkörper 10A abzuheben, so daß auch dieser frei von der Nabe 6 ist. Die Nabe 6 und damit die Abtriebswelle 3 des Elektromotors 2 werden im Bereich des Freilaufes 7 durch keine Reibung gehemmt. Beim Auftreten eines Fehlers in der Steuerung der Hinterradlenkung wird der Strom zu dem Hubmagneten 20 abgeschaltet. Die Feder 17 drückt den Betätigungsstift 15 auf den Wälzkörper 10A. Dadurch wird der Wälzkörper 10A in der Drehrichtung der Nabe 6 mitgenommen. Dabei werden gleichzeitig durch die Koppelung des Käfigs 11 auch die anderen Wälzkörper so weit bewegt, bis sie an einer der Klemmflächen 13 verklemmen. Dadurch wird der Freilauf gesperrt und die Hinterradlenkung in derjenigen Stellung festgehalten, in der der Fehler auftrat.

Bei dem zweiten Ausführungsbeispiel, das in Fig. 4 dargestellt ist, liegen die Wälzkörper 10 an der Umfangsfläche 12 der Nabe 6 an. Da die Wälzkörper 10 in dem Käfig 11B frei geführt sind, können sie frei auf der Umfangsfläche 12 abrollen. Soll der Elektromotor 2 gestartet werden, so muß auch bei diesem Ausführungsbeispiel zunächst der Hubmagnet 20 erregt werden. In diesem Fall drückt er den Betätigungsstift 15A in Richtung auf die Nabe 6, so daß der Käfig 11B durch die Zentriereinrichtung 22 in seine Mittelstellung gestellt und darin gehalten wird. Die Wälzkörper 10 befinden sich dann im mittleren Bereich zwischen den Klemmflächen 13 und können bei sich drehender Nabe 6 frei auf dieser abrollen. Beim Auftreten eines Fehlers der Steuerung der Hinterradlenkung wird auch bei diesem Ausführungsbeispiel der Strom des Hubmagneten 20 abgeschaltet. Die Feder 17A drückt den Betätigungsstift 15A radial nach außen, so daß die Zentriereinrichtung 22 freigegeben wird. Dadurch wird der Käfig 11B frei beweglich. Die Wälzkörper 10 werden durch die sich drehende Nabe 6 in Richtung auf eine der Klemmflächen 13 bewegt und dort verklemmt. Dadurch ist der Freilauf gesperrt.

Damit der Sperrvorgang nicht ruckartig ausgeführt und das bei dem Sperrvorgang auftretende Brems-Spitzenmoment verringert wird, wird die Umfangsfläche 12 der Nabe 6 elastisch ausgeführt. Dazu wird in der Variante nach Fig. 5 die Umfangsfläche 12A der Nabe 6A mit mehreren parallel zueinander angeordneten Ringnuten 25 versehen. Die Stege 26, die sich zwischen den Ringnuten 25 befinden, werden bei hohen Lasten elastisch verformt, so daß der Sperrvorgang elastischer ausgeführt wird. Zusätzlich wird die spezifische Flächenpressung zwischen stehenden Wälzkörpern und drehender Nabe erhöht. Der Schmierstoffilm zwischen den Wälzkörpern und der Nabe wird schneller durchbrochen. Dadurch wird eine kürzere Ansprechzeit erreicht.

In der Variante nach Fig. 6 befindet sich im Inneren der Nabe 6B zwischen ihrer Umfangsfläche 12 und ihrem Nabenkern 27 ein drehelastischer Ring 28. Beim Beginn der Sperrwirkung des Freilaufs kann die Umfangsfläche 12 in Umfangsrichtung innerhalb geringer Grenzen nachgeben.

### Bezugszeichen

- 1: Gehäuse
- 2: Elektromotor
- 3: Abtriebswelle
- 4: Lager
- 5: Lager
- 6, 6A, 6B: Nabe
- 7: Freilauf
- 8: Außenring
- 9: -
- 10, 10A: Wälzkörper
- 11, 11A, 11B: Käfig
- 12, 12A: Umfangsfläche
- 13: Klemmfläche
- 14: Ansatz
- 15, 15A: Betätigungsstift
- 16: Bund
- 17: Feder
- 18: Öffnung
- 19: -
- 20: Hubmagnet
- 21: Federelement
- 22: Zentriereinrichtung
- 23: Dachförmige Schräge
- 24: Dachförmige Schräge
- 25: Ringnut
- 26: Steg
- 27: Nabenkern
- 28: Drehelastischer Ring

## Patentansprüche

1. Elektromotorische Antriebseinheit zur Betätigung einer elektromechanischen Hinterradlenkung von Kraftfahrzeugen,
- mit einem Elektromotor (2), dessen Abtriebswelle (3) trieblich verbunden ist mit einer Einrichtung zum Verstellen der Hinterräder;
- mit einer Feststelleinrichtung zum Feststellen der Abtriebswelle (3) und damit zum Blockieren der Hinterradlenkung,
dadurch **gekennzeichnet,** daß die Feststelleinrichtung durch einen schaltbaren Freilauf (7) gebildet ist, der in einem ersten Schaltzustand für beide Drehrichtungen einen vollkommenen Freilauf und in einem zweiten Schaltzustand für beide Drehrichtungen eine vollständige Sperrung der Abtriebswelle (3) bewirkt.

2. Elektromotorische Antriebseinheit nach Anspruch 1, dadurch **gekennzeichnet,**
- daß der Freilauf (7) einen Außenring (8) und eine dazu konzentrisch angeordnete, mit der Abtriebswelle (3) des Elektromotors (2) verbundene Nabe (6) aufweist;
- daß von den beiden einander zugewandten Flächen von Außenring (8) und Nabe (6), der Innenlauffläche des Außenrings (8) und der Umfangsfläche (12) der Nabe (6), die eine Fläche zylindrisch ausgebildet ist, während die andere Fläche Klemmflächen (13) aufweist;
- daß zwischen dem Außenring (8) und der Nabe (6) mehrere Wälzkörper (10) angeordnet sind und
- daß die Wälzkörper (10) in einem Käfig (11) geführt sind.

3. Elektromotorische Antriebseinheit nach Anspruch 2, dadurch **gekennzeichnet,**
- daß die Wälzkörper (10) durch in dem Käfig (11A) integrierte Federelemente (21) bzw. direkt durch den Käfig (11) von der Nabe (6) weggedrückt werden, und
- daß an dem Freilauf (7) ein Betätigungsstift (15) angeordnet ist, der direkt auf wenigstens einen der Wälzkörper (10) wirkt.

4. Elektromotorische Antriebseinheit nach Anspruch 3, dadurch **gekennzeichnet,** daß der Betätigungsstift (15) durch die Kraft einer Feder (17) in Richtung auf den Wälzkörper (10) beaufschlagt ist und durch die Kraft eines Hubmagneten (20) in Richtung von dem Wälzkörper (10) weg beaufschlagbar ist.

5. Elektromotorische Antriebseinheit nach Anspruch 4, dadurch **gekennzeichnet,** daß in der durch die Kraft der Feder (17) einstellbaren Stellung des Betätigungsstiftes (15) der Freilauf (7) in beiden Drehrichtungen gesperrt ist und in der durch die Kraft des Hubmagneten (20) einstellbaren Stellung der Freilauf (7) gelöst ist.

6. Elektromotorische Antriebseinheit nach Anspruch 2, dadurch **gekennzeichnet,**
- daß die Wälzkörper (10) in dem Käfig (11B) frei geführt sind,
- daß der Freilauf (7) einen Betätigungsstift (15A) aufweist, der zum Lösen des Freilaufes (7) durch die Kraft eines Hubmagneten (20) in Richtung auf den Käfig (11B) beaufschlagbar ist, so daß der Käfig (11B) über eine Zentriereinrichtung (22) in seiner Mittelstellung gehalten wird, und
- daß zum Sperren des Freilaufes (7) der Betätigungsstift (15A) durch die Kraft einer Feder (17A) in entgegengesetzter Richtung beaufschlagt ist, so daß die Zentriereinrichtung (22) freigegeben wird und bei sich drehender Nabe (6) der Käfig (11B) und die Wälzkörper (10) in die Sperrstellung des Freilaufes (7) gedreht sind.

7. Elektromotorische Antriebseinheit nach Anspruch 4 oder 6, dadurch **gekennzeichnet,** daß der Hubmagnet (20) ein Elektromagnet ist, der in erregtem Zustand den Betätigungsstift (15) entgegen der Kraft der Feder (17) bewegt.

8. Elektromotorische Antriebseinheit nach Anspruch 2, dadurch **gekennzeichnet,** daß die Umfangsfläche (12A) der Nabe (6A) mit mehreren parallel zueinander angeordneten Ringnuten (25) versehen ist.

9. Elektromotorische Antriebseinheit nach Anspruch 2, dadurch **gekennzeichnet,** daß die Nabe (6B) zwischen ihrer Umfangsfläche (12) und ihrem Nabenkern (27) einen drehelastischen Ring (28) aufweist.

## Claims

1. Electric motor drive unit for actuating an electromechanical rear-wheel steering device for motor vehicles,
- with an electric motor (2), the drive shaft (3) of which is connected to a device for moving the rear wheels;
- with an immobilizing device for immobilizing the drive shaft (3) and hence for blocking the rear-wheel steering,
characterized in that the immobilizing device is formed by a switchable freewheel (7) which brings about a complete freewheel for both directions of rotation in a first switching condition and a complete blocking of the drive shaft (3) for both directions of rotation in a second switching condition.

2. Electric motor drive unit according to Claim 1, characterized in that
- the freewheel (7) has an outer ring (8) and a hub (6) arranged concentrically therewith and connected to the drive shaft (3) of the electric motor (2);
- that of the two surfaces facing each other of outer ring (8) and hub (6), the inner running surface of the outer ring (8) and the peripheral surface (12) of the hub (6), the one surface is cylindrical whereas the other surface has clamping surfaces (13);
- that several rollers (10) are arranged between the outer ring (8) and the hub (6) and
- that the rollers (10) are guided in a cage (11)

3. Electric motor drive unit according to Claim 2, characterized in that
- the rollers (10) are pressed away from the hub (6) by means of spring elements (21) integrated in the cage (11A) and/or directly by the cage (11) and
- that an actuating pin (15) which acts directly on at least one of the rollers (10) is arranged on the freewheel (7).

4. Electric motor drive unit according to Claim 3, characterized in that the actuating pin (15) is stressed by the force of a spring (17) in the direction of the rollers (10) and can be stressed by the force of a lifting solenoid (20) in the direction away from the rollers (10).

5. Electric motor drive unit according to Claim 4, characterized in that the freewheel (7) is blocked in both directions of rotation in the position of the actuating pin (15) which can be set by means of the force of the spring (17) and the freewheel (7) is released in the position which can be set by means of the force of the lifting solenoid (20).

6. Electric motor drive unit according to Claim 2, characterized in that
- the rollers (10) are freely guided in the cage (11B),
- that the freewheel (7) has an actuating pin (15A) which can be stressed in the direction of the cage (11B) to release the freewheel (7) by means of the force of a lifting solenoid (20) so that the cage (11B) is held in its central position via a centring device (22) and
- that to block the freewheel (7) the actuating pin (15A) is stressed by means of the force of a spring (17A) in the opposite direction so that the centring device (22) is released and with the hub (6) rotating the cage (11B) and the rollers (10) are rotated into the blocked position of the freewheel (7).

7. Electric motor drive unit according to Claim 4 or 6, characterized in that the lifting solenoid (20) is an electromagnet which in the excited state moves the actuating pin (15) against the force of the spring (17).

8. Electric motor drive unit according to Claim 2, characterized in that the peripheral surface (12A) of the hub (6A) is provided with several annular grooves (25) arranged parallel to each other.

9. Electric motor drive unit according to Claim 2, characterized in that the hub (6B) has a torsionally flexible ring (28) between its peripheral surface (12) and its hub core (27).

## Revendications

1. Unité d'entraînement électromotrice pour actionner une direction électromécamique de roues arrière de véhicules automobiles, comportant
- un moteur électrique (2) dont l'arbre moteur (3) est en liaison motrice avec un dispositif de positionnement des roues arrière;
- un dispositif de blocage pour bloquer l'arbre moteur (3) et bloquer ainsi la direction des roues arrière,
**caractérisée** en ce que le dispositif de blocage est formé par un dispositif de roue libre commutable (7) qui a pour effet, dans un premier état de commutation, une roue libre complète dans les deux sens de rotation et, dans un second état de commutation, un blocage complet de l'arbre moteur (3) dans les deux sens de rotation.

2. Unité d'entraînement électromotrice selon la revendication 1, **caractérisée**
- en ce que le dispositif de roue libre (7) comporte une bague extérieure (8) et un moyeu (6) disposé concentriquement à celle-ci et lié à l'arbre (3) du moteur électrique (2);
- en ce que, parmi les deux surfaces mutuellement opposées de la bague extérieure (8) et du moyeu (6), à savoir la surface intérieure de roulement de la bague extérieure (8) et la surface périphérique (12) du moyeu (6), l'une des surfaces est cylindrique tandis que l'autre surface comporte des surfaces de coincement (13);
- en ce que plusieurs éléments de roulement (10) sont disposés entre la bague extérieure (8) et le moyeu (6), et
- en ce que les éléments de roulement (10) sont guidés dans une cage (11).

3. Unité d'entraînement électromotrice selon la revendication 2, **caractérisée**
- en ce que les éléments de roulement (10) sont repoussés à l'écart du moyeu (6) par des éléments élastiques (21) intégrés à la cage (11A) ou directement par la cage (11), et
- en ce qu'une tige d'actionnement (15) est disposée sur le dispositif de roue libre (7) et agit directement sur au moins l'un des éléments de roulement (10).

4. Unité d'entraînement électromotrice selon la revendication 3, **caractérisée** en ce que la tige d'actionnement (15) est sollicitée par la force d'un ressort (17) en direction dudit corps de roulement (10) et peut être sollicitée dans la direction opposée par la force d'un aimant de levage (20).

5. Unité d'entraînement électromotrice selon la revendication 4, **caractérisée** en ce que dans la position de la tige d'actionnement (15) déterminée par la force du ressort (17), le dispositif de roue libre (7) est bloqué dans les deux sens de rotation et en ce que, dans la position déterminée par la force de l'aimant de levage (20) le dispositif de roue libre (7) est libéré.

6. Unité d'entraînement électromotrice selon la revendication 2, **caractérisée**
- en ce que les éléments de roulement (10) sont guidés librement dans la cage (11B),
- en ce que le dispositif de roue libre (7) comporte une tige d'actionnement (15A) qui, pour libérer le dispositif de roue libre (7), peut être sollicitée par la force d'un aimant de levage (20) en direction de la cage (11B) de sorte que la cage (11B) est maintenue dans sa position médiane au moyen d'un dispositif de centrage (22), et
- en ce que, pour bloquer le dispositif de roue libre (7), la tige d'actionnement (15A) est sollicitée par la force d'un ressort (17A) dans la direction opposée, de sorte que le dispositif de centrage (22) est libéré et que, lorsque le moyeu (6) tourne, la cage (11B) et les éléments de roulement (10) tournent jusqu'à la position de blocage du dispositif de roue libre (7).

7. Unité d'entraînement électromotrice selon la revendication 4 ou 6, **caractérisée** en ce que l'aimant de levage (20) est un électro-aimant qui, lorsqu'il est excité, déplace la tige d'actionnement (15) à l'encontre de la force du ressort (17).

8. Unité d'entraînement électromotrice selon la revendication 2, **caractérisée** en ce que la surface périphérique (12A) du moyeu (6A) est pourvue de plusieurs rainures annulaires (25) disposées parallèlement les unes aux autres.

9. Unité d'entraînement électromotrice selon la revendication 2, **caractérisée** en ce que le moyeu (6B) comporte une bague élastique en torsion (28) entre la surface périphérique (12) et le noyau (27) du moyeu.
